# EUROPEAN PATENT APPLICATION

(11) **EP 2 731 068 A1**
(43) Date of publication of application: **14.05.2014**
(21) Application number: 13003301.2
(22) Date of filing: 28.06.2013
(51) Int. Cl.: G06Q 30/02, G06Q 50/00

(54) **Generating Leads For Products And Services Via An Activity Stream**

(30) Priority: 08.11.2012 US 201213672515; 05.12.2012 US 201213706300
(71) Applicant: Linkedin Corporation, Mountain View, California 94043 (US)
(72) Inventor: Grishaver, Michael, Mountain View, CA 94043 (US)
(74) Representative: Müller-Boré & Partner Patentanwälte PartG mbB

(57) **Abstract**

Techniques for generating leads for a company's products and/or services are presented. A message publishing module provides a means for specifying different member-interest buttons to be presented in connection with messages published to the activity or content streams of members of a social network service, where such messages relate to specific products and/or services of a company. The social network service detects which members interact or select the various member-interest buttons, and in connection with which specific products and services. This information is then provided to authorized administrators or representatives of the company, and made available as member-targeting criteria for targeting members with subsequent messages.

## Description

### TECHNICAL FIELD

The present disclosure generally relates to data processing systems. More specifically, the present disclosure relates to methods, systems and computer program products for enabling a representative of a company to both identify members of a social network service who may have interest in a product or service, and to target such members to be recipients of additional information relating to those products and services.

### BACKGROUND

Because social network services maintain vast amounts of social graph and member profile data, companies offering various products and services have naturally gravitated to these social network services with a view to advertising their products and services. Accordingly, many social network services provide various mechanisms by which an advertiser can embed a display advertisement in a web page when that web page is being presented to a member of the social network service who has various member profile attributes or characteristics. However, many users find the presentation of embedded display advertisements to be annoying. Many users block the presentation of such embedded advertisements by using a software product designed to prevent certain content from being rendered, thereby blocking the presentation of embedded advertisements within a web browser. Consequently, the effectiveness of these conventional advertising techniques is generally limited.

### DESCRIPTION OF THE DRAWINGS

Some embodiments are illustrated by way of example and not limitation in the FIG's. of the accompanying drawings, in which:
FIG. 1 is a flow diagram illustrating an example of how information obtained from members interacting with various member-interest buttons presented in connection with certain content, including various messages published in an activity or content stream, can subsequently be used as targeting criteria for publishing additional information to those same members, according to some embodiments of the invention;
FIG. 2 is a block diagram illustrating various components or functional modules of a social network service, consistent with some embodiments;
FIG. 3 is a user interface diagram illustrating an example of a user interface or web page (e.g., a company page) presenting information about a company, including an activity stream showing various messages or status updates published on behalf of the company by authorized representatives of the company, consistent with some embodiments;
FIG. 4 is a user interface diagram illustrating an example of a user interface or web page (e.g., a products page) presenting information about various products of a company, consistent with some embodiments;
FIG. 5 is a user interface diagram illustrating an example of a user interface for a message publishing module via which an authorized representative of a company can publish messages, on behalf of the company and relating to specific products and/or services of the company, to various activity streams, consistent with some embodiments;
FIG. 6 is a user interface diagram illustrating an example of a user interface for a member-targeting module, enabling an authorized representative of a company to target certain members of a social network service to receive information about certain products and/or services, consistent with some embodiments of the invention;
FIG. 7 is a user interface diagram illustrating an example of a user interface or web page showing information about certain members of a social network who have expressed an interest in a particular product or service of a company, consistent with some embodiments; and
FIG. 8 is a block diagram of a machine in the form of a computing device within which a set of instructions, for causing the machine to perform any one or more of the methodologies discussed herein, may be executed.

### DETAILED DESCRIPTION

The present disclosure describes methods, systems and computer program products that individually enable an authorized representative of a company to identify members of a social network service who may have an interest in a product or service offered by the company by detecting how members interact with certain content, including various messages published to an activity stream. Additionally, the present disclosure describes techniques that enable an authorized representative of a company to target members of a social network service who have expressed interest in a product or service of the company to be recipients of additional information relating to the product or service, where those members can be targeted by, and the information can be specifically tailored to the type and level of interest expressed by the member. In the following description, for purposes of explanation, numerous specific details are set forth in order to provide a thorough understanding of the various aspects of different embodiments of the present invention. It will be evident, however, to one skilled in the art, that the present invention may be practiced without all of the specific details.

Consistent with some embodiments, a social network service provides certain organizations, for example, such as companies, schools, government entities, non-profits, or other types of organizations, with an opportunity to establish a presence within a social network service, thereby providing visibility to the many members of the social network service. For instance, much like a member has a member profile page, the social network service may simply provide organizations with the ability to generate one or more customized web pages that are dedicated to presenting information about the organization. In some instances, the web pages are customizable by one or more representatives of the organization, but are generally hosted by the provider of the social network service. The web page for an organization may be semi-structured, such that a representative of the organization can simply enter or input various items of information, and the resulting web page will present the information in various content modules having a uniform look and feel that is determined by the provider of the social network service.

In some instances, an organization may generate multiple web pages that are associated with one another, or have some hierarchical structure that is either predefined by the provider of the social network service, or established by the organization. For instance, in the particular case of a company, a representative of the company may establish a primary company page, and then one or more related pages dedicated to the individual products and/or services offered by the company. With some embodiments, multiple versions of a web page dedicated to a particular product or service might be created for different target audiences. For example, a particular version of a product page might be associated with a particular selection of member profile attributes such that members of the social network service with different sets of member profile attributes are presented with different versions of a web page for the same product or service. When a member requests a particular product page, if the member has member profile attributes satisfying a particular selected set of member profile attributes, the version of the page corresponding with the selection of member profile attributes will be presented to that particular member. Certainly, with other scenarios, other web page arrangements and hierarchies are possible.

With some embodiments, an organization's presence within the social network service may be facilitated by representation of the organization as an entity in a social graph maintained by the social network service. For example, consistent with some embodiments, a social graph is implemented with a specialized graph data structure in which various entities (e.g., people, companies, schools, government institutions, non-profits, and other organizations) are represented as nodes connected by edges, where the edges have different types representing the various associations and/or relationships between the different entities. Although other techniques may be used, with some embodiments the social graph data structure is implemented with a graph database. Accordingly, if a member of the social network service with the name Jeffrey Beaner is employed at the company, Widgets Inc., this particular association would be represented in the social graph data structure by a node representing the member, Jeffrey, being connected via an edge to another node representing the entity or organization, Widgets Inc., where the particular edge type indicates the specific type of association - in this case, Jeffrey's status as a current employee of Widgets, Inc. Consequently, at least with some embodiments, an organization may have a presence within a social graph of a social network service without necessarily having any particular web-based content that is hosted by the social network service. This enables the organization to establish a presence with members of the social network service, for example, by having one or more authorized representatives of the organization generate or author content that can be published and presented in the personalized data feeds of members of the social network service.

With some embodiments, only members of the social network service who are authorized representatives of a particular organization are provided the ability to establish a formal presence and take various actions on behalf of an organization with the social network service. For instance, with some embodiments, the social network service may be role-based, such that members may be assigned various roles that establish various privileges. Depending upon a member's role, the member may be able to perform various actions, such as, generate a web page on behalf of the organization, add products and/or services to an organization's profile and web page, generate and/or edit content presented via a web page of the organization, and/or publish messages such as status updates, publish promotional materials and information relating to various products and/or services, or otherwise direct communications to other members of the social network service on behalf of the organization. There are many techniques beyond the scope of the present inventive subject matter that may be used to validate or verify the identity and authenticity of a member upon assigning that member a particular role and corresponding privileges. For instance, at least with some embodiments, a member must verify an email address that corresponds with a known email domain of the organization before that member will be granted a certain role and the corresponding privileges required for taking actions on behalf of the organization.

Consistent with some embodiments, with proper authorization, certain administrators or representatives of an organization can publish content including messages (sometimes referred to as "status updates") that are viewable by other members of the social network service via one or more data feeds. A data feed consistent with embodiments of the invention may be known to those skilled in the art by a variety of different names, including a "stream," "status update stream," "network update stream," "news feed," "content stream," and/or "activity stream." Similarly, skilled artisans may refer to this type of message by many different names, including an "update," "status update," "tweet," or simply, and generically, as a message.

In any case, when an authorized representative of an organization publishes a message, the message may appear in an activity stream or content stream presented on a web page of the particular organization on whose behalf the message is being published. Such a web page may be hosted by the social network service, or by the organization. With some embodiments, the messages may appear in a user interface of a mobile application executing on a mobile device (e.g., phone or tablet computing device). Additionally, the messages may appear in a personalized activity stream or content stream of those members of the social network service who have taken some action to subscribe to receive messages published on behalf of the organization. A personalized activity stream or content stream may be presented via a web page hosted by the social network service, or in a user interface of a mobile application. For example, a member of the social network service may subscribe to receive messages or status updates published on behalf of an organization by simply selecting or otherwise interacting with a graphical user interface element (e.g., a button) presented on a web page in connection with the organization. The graphical user interface element (e.g., button) may be labelled with the text, "follow," "like," "+1," or something similar. The concept of subscribing to receive information concerning a particular entity (e.g., person, organization, product, etc.) is known to many as "following." In some instances, a member may be automatically subscribed to receive messages published on behalf of an organization when the member selects or otherwise interacts with a particular user interface element that is presented in connection with some particular content, such as a message in an activity or content stream. In other instances, the association or relationship that a member has with a particular entity or organization as defined in the social graph may automatically result in the member being subscribed to receive information from a particular entity. For example, if a member indicates in his or her member profile that the member is employed with a particular company, attending a particular school, graduated from a particular school, and so forth, this information may be used as the basis for automatically subscribing the member to receive information published on behalf of a particular entity or organization.

With some embodiments, when publishing a message, an authorized administrator or representative of an organization may indicate via the user interface for the message publishing module that the message specifically relates to a particular product or service of the organization on behalf of which the message is being published. For example, the representative may simply select from a drop down list the particular product or service to which the message relates. In other instances, the user interface for the message publishing module via which the authorized representative enters or inputs the message may be presented as part of a user interface (e.g., web page) that is specific to a particular product or service of the organization. In such instances, the message may, by default, be associated with the particular product or service to which the user interface or web page relates.

In addition to specifying a particular product or service to which a message relates, when preparing a message, the authorized representative may specify or select one or more different types of user interface elements (e.g., buttons or links), referred to hereinafter as member-interest buttons, that are to be presented in connection with the message when presented in an activity or content stream. A member-interest button may be a selectable button or link, and may have any of a wide variety of appearances (e.g., labels, icons, pictures, etc.). Some common examples of member-interest buttons are buttons or links with labels such as, "like", "+1", "recommend", "follow", and so forth. Other member-interest buttons may appear with different labels and have a slightly nuanced meaning, such as, "I am interested", "I love this", "I want more information", "I own this", "I support this", "I want to buy this", and so forth. In general, when a member of the social network service selects a particular member-interest button presented in association with some content relating to a particular product or service, the member is expressing some feeling or personal thoughts regarding the particular product or service to which the content relates. In some instances, the meaning attached to a particular member-interest button may be more explicit, such as in the case of buttons with labels such as, "I want this," "I own this," "I want more information," and so forth. By presenting more than one type of member-interest button with content relating to a specific product or service, such as a message displayed in an activity or content stream, the organization on whose behalf the content has been published is able to obtain a variety of information about how members in the aggregate feel, or think, about their specific products and/or services. For instance, with some embodiments, the social network service provides each organization with an administrative user interface that displays various information about the members of the social network service who have expressed some feeling, interest or thought in connection with specific products and/or services, by means of selecting or otherwise interacting with a member-interest button presented in connection with certain content, such as a message relating to a particular product or service. The administrative interface may, for a particular product, display or present the number of members of the social network service who are following the company (or, a product or service of the company) and have selected a particular type of member-interest button in connection with a particular product or service of the company. Additionally, the administrative user interface may display various statistical information, based on analysis of member profile attributes, for the members who have selected each type of member-interest button, thereby providing the organization with insightful information about various member profile attributes possessed by members of the social network service who have different levels of interest in specific products and/or services of the organization. For example, for a particular product or service of the company, the administrative interface may present a breakdown of the geographical areas in which members reside, for the members who have expressed a particular interest, feeling or thought about the product or service, by interacting with a particular type of member-interest button. Similarly, for a particular set of members who have expressed some feeling, interest or thought in connection with a specific product or service of a company, by means of selecting or otherwise interacting with a member-interest button presented in connection with a message relating to the particular product or service, the administrative interface may present information relating to the level of education of the members, the industry and/or field of employment for the members, the size of company (e.g., measured by number of employees) at which the members are employed, the age or seniority level of the members, and so forth. Consequently, an authorized administrator or representative of a company can obtain insightful information about the type and characteristics of the people who are interested in the products and services of the company.

In addition to obtaining information about which members have expressed interest in, or otherwise expressed a feeling or thought relating to a product or service of an organization by means of interacting with various member-interest buttons, an authorized administrator representative of the organization is provided with a means to target or select certain members of the social network service to receive additional information about a product or service. For example, a user interface associated with member targeting logic enables a representative of an organization to target members with additional information, based on those members having previously interacted with a specific type of member-interest button, and thereby having previously expressed some interest, feeling or thought in relation to a particular product or service. For instance, if a member views a message in his or her activity or content stream, where the message relates to a particular product of a company, the member may select or interact with a member-interest button labelled, "I want this." Additionally, members may interact with member-interest buttons of varying types as presented in connection with content relating to specific products and/or services, for example, in a user interface or web page for the company (e.g., a company page), or products and services of the company (e.g., a products page), or even in content hosted by the company or a third-party. Accordingly, in a subsequent message, a representative of the company can, via a simple member-targeting interface of the member targeting logic, select a graphical user interface element that corresponds with targeting criteria for all members who have selected the member-interest button labelled, "I want this", in connection with the particular product. As such, the representative can tailor the content of a follow-up message that will be communicated to all members who, by way of interacting with a member-interest button labelled as "I want this", have expressed a desire to have or own a particular product. The follow-up message may, for example, provide additional information about the product, provide information about an upcoming sale for the product, or provide a redeemable coupon or promotional pricing for the product. With some embodiments, the message may include information that enables the recipient to obtain a digital coupon or pass that is compatible with a mobile application for managing coupons, tickets, and loyalty cards, such as a mobile or electronic wallet application. Other advantages of the present inventive subject matter will be readily apparent from the description of the various figures that follows.

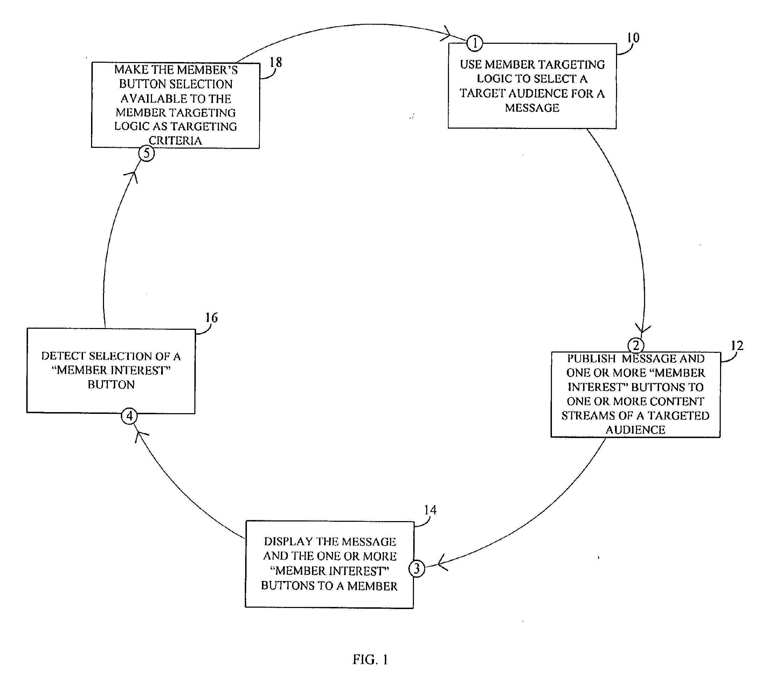

FIG. 1 is a flow diagram illustrating an example of how information obtained from members interacting with various member-interest buttons presented in connection with certain content, including various messages published in an activity or content stream, can subsequently be used as targeting criteria for publishing additional information to those same members, according to some embodiments of the invention. As illustrated in FIG. 1, at method operation 10 an authorized representative of a company (or other organization) interacts with a user interface of a member-targeting module to select specific member-targeting criteria that will determine the members of a social network service to which a message is to be published or presented, for example, via each member's respective personalized activity stream. With some embodiments, only those members who have taken some affirmative action to subscribe to receive messages published on behalf of the organization will be selectable via the member-targeting criteria. At least in some embodiments, the targeting module may operate in a manner consistent with what is described in U.S. Patent Application No. 13/601,971, entitled, "Targeted Status Updates," filed on August 31, 2012, and incorporated herein, in its entirety, by way of reference. In addition to selecting the targeting criteria to define the set of members who are to receive the message, the authorized representative may also select or specify a particular product or service to which the message relates. In some instances, the product or service to which the message relates may be automatically defined by virtue of the user interface for the message publishing module being presented in a user interface or web page, or a portion thereof, that is related to some specific product or service. With some embodiments, the authorized representative may select or otherwise specify which particular member-interest buttons are to be presented in connection with the message when the message is displayed in an activity or content stream.

At method operation 12, after selecting the specific member-targeting criteria to define which members of the social network service are to be presented with the message, the message is published so that it will appear in one or more activity or content streams, or be communicated to the members via another communications channel (e.g., email), or a notification via a mobile application. With some embodiments, the message may be presented to all viewers of an activity or content stream embedded or presented in a company page or product page of the particular company on whose behalf the message is being published. In addition, the published message may be presented in the personalized activity or content streams of those members of the social network service who satisfy the member-targeting criteria specified by the authorized representative (e.g., as in method operation 10). When a member views the message, one or more member-interest buttons are presented with the message. For example, a member-interest button may be a "like" button, a "+1" button, a button labelled as, "I want to know more," "I own this," "I want this," "Please contact me," and so forth. In some instances, a single member-interest button may be presented, while in other instances, multiple member-interest buttons may be presented, thereby providing the recipient with one or more options for interacting with the message.

At method operation 16, a member viewing the message selects or otherwise interacts with a particular member-interest button, and such interaction is detected by the social network service. Accordingly, the social network service stores information representing the member's selection of the particular member-interest button in relation with the particular product or service to which the message relates. As other recipients of the message also select or interact with member-interest buttons presented with the particular published message or presented in connection with some other content relating to the particular product or service, this information is also stored.

Finally, at method operation 18, the information concerning which and how many members have expressed interest in a particular product or service by means of interacting with a member-interest button is aggregated and made available to the member-targeting logic for use as member-targeting criteria. For instance, when an authorized representative of the company uses the message publishing module to author a subsequent message, the information about the members who have selected certain member-interest buttons presented in association with content (e.g., a published message) relating to the particular product or service will be presented as member-targeting criteria. Accordingly, an author of a second message can specify that all members who have previously selected or otherwise interacted with a particular type of member-interest button presented in connection with content relating to the particular product or service are to be recipients of the second message. In this manner, authorized representatives of the company can both tailor their message concerning a particular product or service to the particular members who have previously selected or otherwise interacted with specific member-interest buttons presented in connection with messages relating to specific products or services.

Consider for example a situation in which a first message relating to a first product is published to all members of a social network service who are following, or are otherwise subscribed to receive messages published on behalf of a particular company. Upon viewing the first message, several of the members select or otherwise interact with a member-interest button that is labelled as, "I own this product." Using the member-targeting logic consistent with embodiments of the invention, a representative of the company can now target those members who previously selected the member-interest button labelled, "I own this product," with a subsequent message relating to an accessory for the first product, or a second product that is complimentary to the first product.

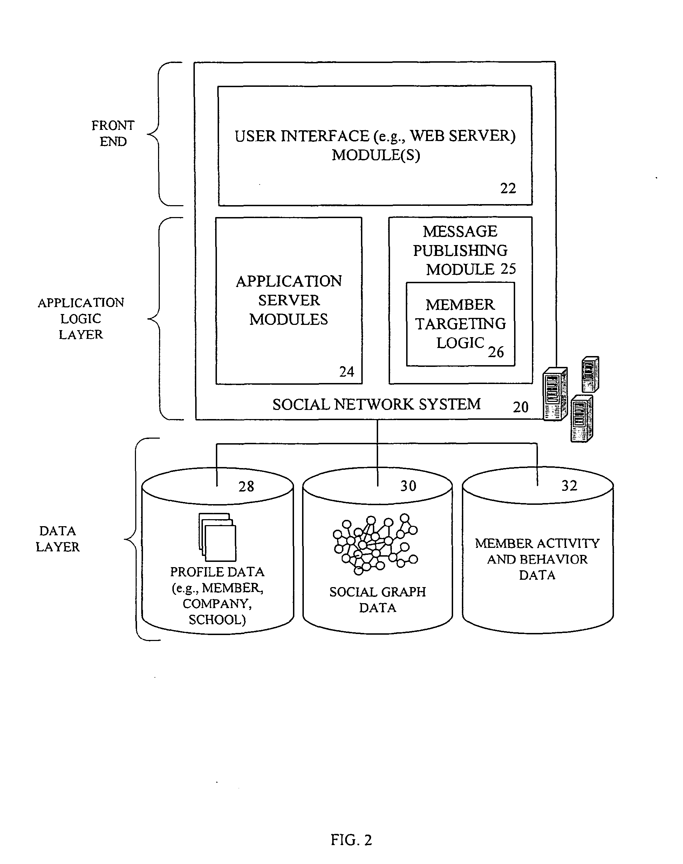

FIG. 2 is a block diagram illustrating various components or functional modules of a social network service, consistent with some embodiments. As shown in FIG. 2, the front end consists of a user interface module (e.g., a web server) 22, which receives requests from various client-computing devices, and communicates appropriate responses to the requesting client devices. For example, the user interface module(s) 22 may receive requests in the form of Hypertext Transport Protocol (HTTP) requests, or other web-based, application programming interface (API) requests. The application logic layer includes various application server modules 14, which, in conjunction with the user interface module(s) 22, generates various user interfaces (e.g., web pages) with data retrieved from various data sources in the data layer. With some embodiments, individual application server modules 24 are used to implement the functionality associated with various services and features of the social network service. For instance, the ability of an organization to establish a presence in the social graph of the social network service, including the ability to establish a customized web page on behalf of an organization, and to publish messages or status updates on behalf of an organization, may be services implemented in independent application server modules 24. Similarly, a variety of other applications or services that are made available to members of the social network service will be embodied in their own application server modules 24.

As shown in FIG. 2, the data layer includes several databases, such as a database 28 for storing profile data, including both member profile data as well as profile data for various organizations. Consistent with some embodiments, when a person initially registers to become a member of the social network service, the person will be prompted to provide some personal information, such as his or her name, age (e.g., birthdate), gender, interests, contact information, home town, address, the names of the member's spouse and/or family members, educational background (e.g., schools, majors, matriculation and/or graduation dates, etc.), employment history, skills, professional organizations, and so on. This information is stored, for example, in the database with reference number 28. Similarly, when a representative of an organization initially registers the organization with the social network service, the representative may be prompted to provide certain information about the organization. This information may be stored, for example, in the database with reference number 28, or another database (not shown). With some embodiments, the profile data may be processed (e.g., in the background or offline) to generate various derived profile data. For example, if a member has provided information about various job titles the member has held with the same company or different companies, and for how long, this information can be used to infer or derive a member profile attribute indicating the member's overall seniority level, or seniority level within a particular company. With some embodiments, importing or otherwise accessing data from one or more externally hosted data sources may enhance profile data for both members and organizations. For instance, with companies in particular, financial data may be imported from one or more external data sources, and made part of a company's profile.

Once registered, a member may invite other members, or be invited by other members, to connect via the social network service. A "connection" may require a bi-lateral agreement by the members, such that both members acknowledge the establishment of the connection. Similarly, with some embodiments, a member may elect to "follow" another member. In contrast to establishing a connection, the concept of "following" another member typically is a unilateral operation, and at least with some embodiments, does not require acknowledgement or approval by the member that is being followed. When one member follows another, the member who is following may receive status updates or other messages published by the member being followed, or relating to various activities undertaken by the member being followed. Similarly, when a member follows an organization, the member becomes eligible to receive messages or status updates published on behalf of the organization. For instance, messages or status updates published on behalf of an organization that a member is following will appear in the member's personalized data feed or content stream. In any case, the various associations and relationships that the members establish with other members, or with other entities and objects, are stored and maintained within the social graph, shown in FIG. 2 with reference number 30.

The social network service may provide a broad range of other applications and services that allow members the opportunity to share and receive information, often customized to the interests of the member. For example, with some embodiments, the social network service may include a photo sharing application that allows members to upload and share photos with other members. With some embodiments, members may be able to self-organize into groups, or interest groups, organized around a subject matter or topic of interest. With some embodiments, the social network service may host various job listings providing details of job openings with various organizations.

As members interact with the various applications, services and content made available via the social network service, the members' behavior (e.g., content viewed, links or member-interest buttons selected, etc.) may be monitored and information concerning the member's activities and behavior may be stored, for example, as indicated in FIG. 2 by the database with reference number 32. This information may be used to classify the member as being in various categories. For example, if the member performs frequent searches of job listings, thereby exhibiting behavior indicating that the member is a likely job seeker, this information can be used to classify the member as a job seeker. This classification can then be used as a member profile attribute for purposes of enabling others to target the member for receiving messages or status updates. Accordingly, a company that has available job openings can publish a message that is specifically directed to certain members of the social network service who are job seekers, and thus, more likely to be receptive to recruiting efforts.

With some embodiments, the social network system 10 includes what is generally referred to herein as member targeting logic 26. The member targeting logic 26 enables an authorized representative of an organization, such as a company, an educational institution or school, a government entity, a non-profit organization, or any other type of organization to address a message or status update to a set of recipients who have subscribed to receive messages or status updates on behalf of the organization and who possess certain member profile attributes as selected or specified by the author of the message. Accordingly, a representative of an organization can tailor a message or status update to a particular subset of members who have subscribed to receive messages or status updates on behalf of the organization. Because the status updates can be tailored to the selected audience, the selected audience is more likely to find the content to be of interest and the overall level of engagement is increased.

With some embodiments, the authorized representative of the company can tailor the message to a member audience based on the members having previously expressed some specific interest with respect to a particular product or service, for example, by having interacted with a particular member-interest button presented in connection with content (e.g., a published message) relating to the specific product or service. Accordingly, consistent with some embodiments, a member's previous selection or interaction with a member-interest button presented in association with a message or status update relating to a particular product or service of a company can be used as targeting criteria with the member targeting logic 26. With some embodiments, when an authorized representative is preparing to publish a message, the author can select certain member-targeting criteria that will cause the message to be published to select members, such as those members who previously selected a particular member-interest button.

Although not shown, with some embodiments, the social network system 20 provides an application programming interface (API) module via which third-party applications can access various services and data provided by the social network service. For example, using an API, a third-party application may provide a user interface and logic that enables an authorized representative of an organization to publish messages from a third-party application to a content hosting platform of the social network service that enables facilitates presentation of activity or content streams maintained and presented by the social network service. Such third-party applications may be browser-based applications, or may be operating system-specific. In particular, some third-party applications may reside and execute on one or more mobile devices (e.g., phone, or tablet computing devices) having a mobile operating system.

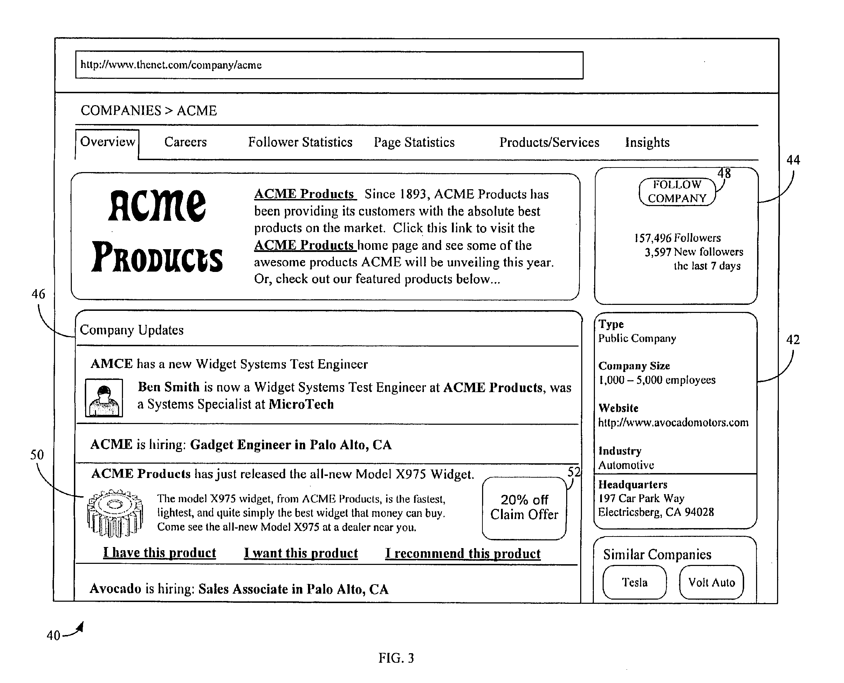

FIG. 3 is a user interface diagram illustrating an example of a user interface or web page (e.g., a company page) 40 presenting various information about a company, including an activity stream showing various messages or status updates published, on behalf of the company, by authorized representatives of the company, consistent with some embodiments. As illustrated in FIG. 3, the example web page is for a company with the name, ACME Products. Accordingly, in this example, a representative of the company has established what might be referred to as a company page 40 with the social network service. In this example, the company page 40 for ACME Products is hosted by the social network service. However, in alternative embodiments, a third a third party or the company itself may host the company page. In any case, members of the social network service who may be interested in the company can access the company page for ACME Products to view a variety of information about the company. For instance, in the example of FIG. 3, the company page for ACME Products presents a brief history and background of the company 42, as well as information about the number of members who are following the company 44.

Consistent with some embodiments, a company page may include a navigation bar with a variety of tabs relating to specific topical categories. For instance, in the example of FIG. 3, the company page for ACME Products includes a navigation bar showing tabs for "Careers," "Follower Statistics," "Page Statistics," "Products and Services," and "Insights." With some embodiments, selecting a particular tab will cause the content of the page to change, such that content relating to the selected tab is presented. Similarly, the content may be personalized based on the identity of the member viewing the content, such that an authorized administrator or representative of the company may view certain information that is not viewable by ordinary members. For example, by selecting the tab labelled "Careers," a viewing member may be presented with information about various job listings for open employment positions with the company. In connection with the "Follower Statistics" tab, the company page may present statistical information about the members of the social network service who are following the company, or who are subscribed to receive messages or status updates on behalf of the company. Such information generally includes the total number of company followers, the total number of new company followers within some predefined number of days (e.g., last seven days), the number of messages or status updates published on behalf of the company within the same predefined number of days, and so forth. With some embodiments, the follower statistics information may additionally include information about the number of members who have interacted with certain member-interest buttons in connection with certain specific products and services of the company. In addition to follower statistics, with some embodiments the company page presents page statistics, such as, the total number of company page views, the number of company page views within some predefined number of days (e.g., last seven days), and/or the number of page or link selections (e.g., clicks) within the same predefined number of days.

With some embodiments, the company page may include a tab associated with content relating to various insights about the company as derived from member profile information and the viewing member's social graph. For example, in connection with the "Insights" tab in the example web page of FIG. 3, a viewing member may be presented with information identifying members of the social network service who are employed at ACME Products and who have new job titles, or information about members who have recently departed ACME Products for a new company. In addition, the viewing member may be presented with information about the number of members of the social network service who are in the viewing member's social graph (e.g., first degree or direct connections, followers, etc.) and who are employed at ACME Products. The company page may present statistical information about the geographical location of residences for the employees of the company. Of course, other insightful information may be presented as well, such as the top companies that employees of ACME Products went to subsequent to departing ACME Products.

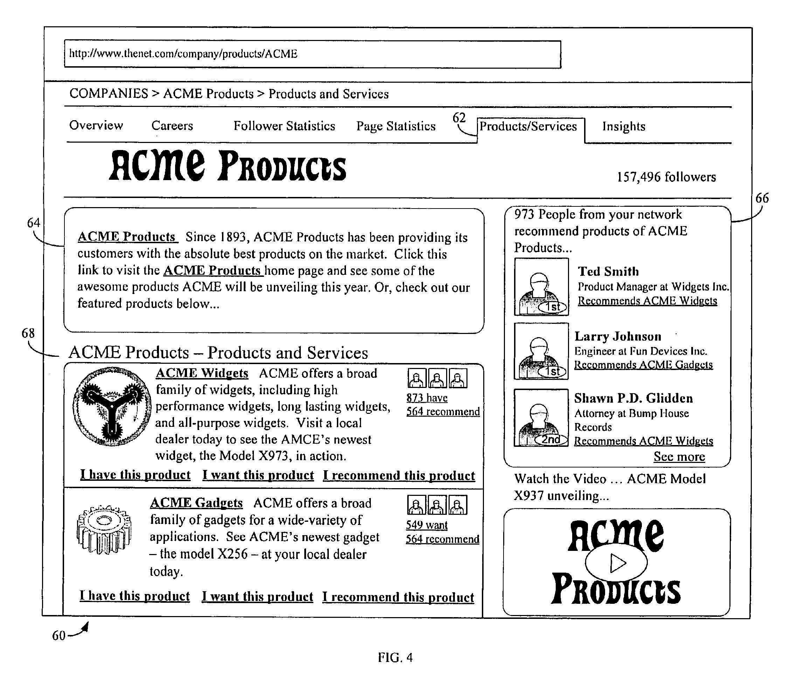

In the example presented in FIG. 3, the tab labelled as "Products/Services" is associated with content relating to the products and services offered by the company, ACME Products. Accordingly, if a viewing member selects the "Products/Services" tab, certain information about the products and services offered by ACME Products is presented to the viewing member. An example of such content is shown in the example products page illustrated in FIG. 4.

Referring again to FIG. 3, various items of content are shown in separate content modules. In the portion of the example user interface with reference number 46, the company page presents a user interface for a data feed, generally referred to as an activity stream, content stream, or company updates stream, via which messages or status updates published on behalf of the company are presented. With some embodiments, the content that is presented in the company updates stream is a combination of content that has been automatically generated by some application or service of the social network service or a third-party, and content that has been published by an administrator or representative of the company who has been granted the authority to publish content on behalf of the company. With some embodiments, the messages or status updates that are published on behalf of the company are visible to all members of the social network service via the company page, regardless of whether a member is following the particular company and regardless of whether the member possesses the particular member profile attributes selected as targeting criteria by the author of the content, when the message or status update was initially published. With some alternative embodiments, status updates in the company updates stream are only visible to those members of the social network service who are following the company and/or possess the member profile attributes selected as targeting criteria by the publisher of the status update. The messages or status updates published on behalf of the company will only appear in a member's personal activity or content stream if the member has subscribed to receive messages (e.g., if the member is following the company), and the member possesses the member profile attributes that have been selected as targeting criteria by the publisher of the status update when publishing the message.

In the example activity stream presented in FIG. 3, the message or status update with reference number 50 is a message that is associated with a particular product of ACME products - the Model X975 Widget. With some embodiments, an authorized representative of a company can author content (e.g., publish messages) that are associated with specific products. In this example, the particular message 50 includes three different member-interest buttons, labelled as, "I have this product," "I want this product," and "I recommend this product." Accordingly, the viewing member can interact with the member-interest buttons by selecting the particular button or buttons that best correspond with the member's interest in the particular product, or how the member thinks or feels about the particular product. In various alternative embodiments, the number and actual label of the member-interest buttons may vary.

In addition to the member-interest buttons, the activity stream message with reference number 50 includes a separate user interface element (e.g., the button with reference number 52) with the label, "20% Off - Claim Offer." With some embodiments, a message may include information relating to a promotional offer, a promotional code or redeemable coupon, or simply a description of a limited time sale for the particular product or service. This information may be presented in any number of ways. For example, with some embodiments, the promotional offer may include a link to an externally hosted web page via which the product is being offered. The promotional offer may be presented in the form of a button or other user-selectable interface element, such that, when selected, additional information about the promotional offer is presented. With some embodiments, the user-selectable interface element, when selected, may invoke a communication (e.g., an email, a text message or some other type of message) directed to an address associated with the viewing member. The communication may include some digital information representing a coupon, pass, or some related content, that is compatible with a mobile application, such as a digital or electronic coupon application, a coupon, pass or ticket management application or some other mobile application that allows its user to receive, present and redeem online or at a merchant location, various coupons, tickets, credits, points, virtual currencies, and so forth. Accordingly, with some embodiments, by simply clicking or selecting the button with reference number 52 in the activity stream 46, the viewing member can receive a promotional code or coupon that is redeemable in a purchase transaction for the product with which the message relates.

In the content module with reference number 44, the company page for ACME Products shows the overall number of members who are following the company via the social network service, as well as the number of new followers who have just recently (e.g., within the last seven days) begun following the company. If a member of the social network service who is viewing the company page is not currently a follower of the company, the member is presented with a graphical user interface element, such as the "Follow Company" button with reference number 48. By selecting the button 48, a member can become a follower of the company. With some embodiments, the "Follow Company" button 48 may appear on various web pages hosted by other entities - that is, entities other than the provider of the social network service. Accordingly, members of the social network service may be presented with the opportunity to follow an organization, and thus subscribe to receive messages published on behalf of the organization, via any number of other applications, web pages or other user interfaces (e.g., mobile applications, etc.). As a follower, the member will automatically be subscribed to receive messages or status updates published on behalf of the company in an activity or content stream that is personalized for the particular member, and for example, presented in a personalized web page or user interface of a mobile application, distinct from the company page.

FIG. 4 is a user interface diagram illustrating an example of a user interface or web page (e.g., a products page 60) presenting various information about products of a company, consistent with some embodiments. In the example user interface of FIG. 4, the content relating to the products and services of ACME Products is presented as a result of a viewing member selecting the "Products/Services" tab 62 in the navigation bar. Of course, in other embodiments, a variety of other navigational techniques may result in presentation of a user interface, such as that illustrated in FIG. 4. In this example, the products page for ACME Products includes a content module 64 providing some background information about the company, a content module 66 providing information about different members of the social network service who are associated (e.g., via the social graph maintained by the social network service) with the viewing member and are following the company or are otherwise interested in products and services of the company, and a content module 68 presenting information about each of the several products and/or services that are offered by ACME Products. With some embodiments, an administrator or representative of the company may be enabled to customize the selection, format and layout of the various content modules presented in a products page.

In the example of FIG. 4, the content module with reference number 68 presents information about each of the various products (and services) of the company, ACME products. Along with a short description of each product and service, there are various member-interest buttons presented, thereby enabling the viewing member to optionally select the member-interest button that best corresponds with how he or she thinks or feels about the product or service with which the member-interest button is associated. In addition, for each product presented, information about the number of members of the social network service who have selected or otherwise interacted with a particular type of member-interest button is shown.

With some embodiments, the viewing member may be able to select any one of the products or services presented in the content module with reference number 68 to view additional product or service-specific information. For example, by selecting the ACME Widgets product in the content module with reference number 68, the viewing member may be presented with a new web page, or an alternative view of the same web page, with information specifically relating to the selected product (e.g., ACME Widgets) or ACME Gadgets, or another of ACME's products or services). With some embodiments, the product specific information may include a member's forum where members of the social network service can interact with one another, and interact with employees of ACME products. For example, members may be able to post questions about products and receive technical support, access product manuals and other downloadable files relating to specific products and/or services, or perform a real-time chat or instant messaging session with other members who may use or be interested in a particular product.

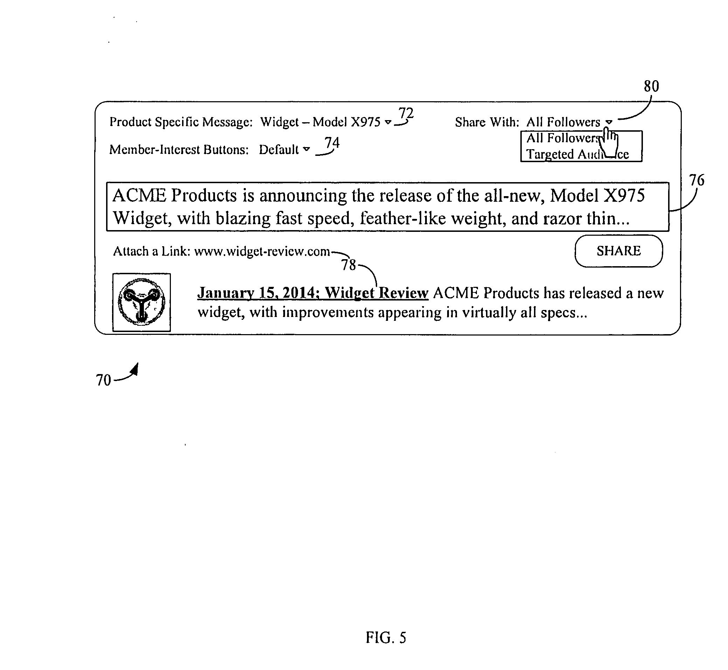

FIG. 5 is a user interface diagram illustrating an example of a user interface for a message publishing module 70 via which an authorized representative of a company can publish messages, on behalf of the company and relating to specific products and/or services of the company, to various activity or content streams, consistent with some embodiments. The portion of the user interface shown in FIG. 5 may, for example, be presented within any one of a number of user interfaces or web pages accessible to an authorized administrator or representative of an organization. For example, the interface for the message publishing module may be presented in an administrator's view of the company page, a products and services page, a page for a specific product or service, or some other administrative interface.

The interface of the message publishing module 70 allows an administrator or representative of a company to author a message for publication to one or more activity or content streams. As shown in the example interface of FIG. 5, at least with some embodiments, the administrator can select a specific product to which the message relates. For example, in FIG. 5, via the user interface element with reference number 72, the product, "Widget - Model X975" has been selected. With some embodiments, the message may automatically be associated with a particular product, for example, by inclusion of the message-publishing interface within a web page for a particular product or service. As such, in some instances, the user interface element 72 for selecting a product may not be present in the interface for the message publishing module. At least with some embodiments, the message that is ultimately published will appear in certain activity or content streams based in part on the product that is selected. For instance, if a particular product has a product page, when a message relating to the product is published, the message may be presented in an activity or content stream that is included in the product page for that particular product, such that any member viewing the product page will be able to view the message.

In addition to selecting a product to which the message relates, an administrator can select which, if any member-interest buttons are to appear with the message when the message is presented in an activity or content stream. Alternatively, the administrator and message author may select a default setting for the particular product to which the message relates, where the default setting will determine the particular member-interest buttons that are to be presented with the message. For example, in FIG. 5, the user interface element with reference number 74 shows that the administrator or company representative has selected the default settings for the member-interest buttons. The default settings may specify both the number and type of member-interest buttons that are to be presented, if any, with a message, or in particular, a message relating to a specific product.

In addition to specifying the product and the member-interest buttons to appear with the message, the administrator is presented with an input box 76 via which the administrator can input the text of a message. In the example of FIG. 5, the input box 76 is shown with reference number 76. In addition to providing some text, the message author may share a link to some other content, as illustrated in FIG. 5 in connection with reference number 78. When the author provides the link, the content associated with the link, or some portion thereof, is automatically retrieved and inserted into the message.

Although not shown in the example of FIG. 5, with some embodiments, the user interface for the message publishing module 70 may provide a means to allow the message author to include content or information relating to a promotional offering of the product or service to which the message relates. Accordingly, with some embodiments, the author may provide some information (e.g., a link, a file, an image), which corresponds with a promotional offering of the product or service. The promotional offering may be in the form of a downloadable and printable coupon, a digital coupon, redeemable credits or virtual currency, and so forth. With some embodiments, a digital coupon, pass or similar offering may be compatible with a mobile application, such as a digital or e-wallet application, or an application that manages coupons, merchant loyalty cards, and so forth. Accordingly, with some embodiments, a viewing member may simply click, select or otherwise interact with a graphical user interface element presented in connection with the message relating to the product to gain access to a digital coupon or similar promotional offering for the product.

Finally, a separate user interface element (e.g., a button or link) provides the author with the option of specifying who should receive the message or status update when published. In this example, the author can select "All Followers" to have all followers of the company receive the message or status update, or the author can select to have a "Targeted Audience" receive the published message or status update.

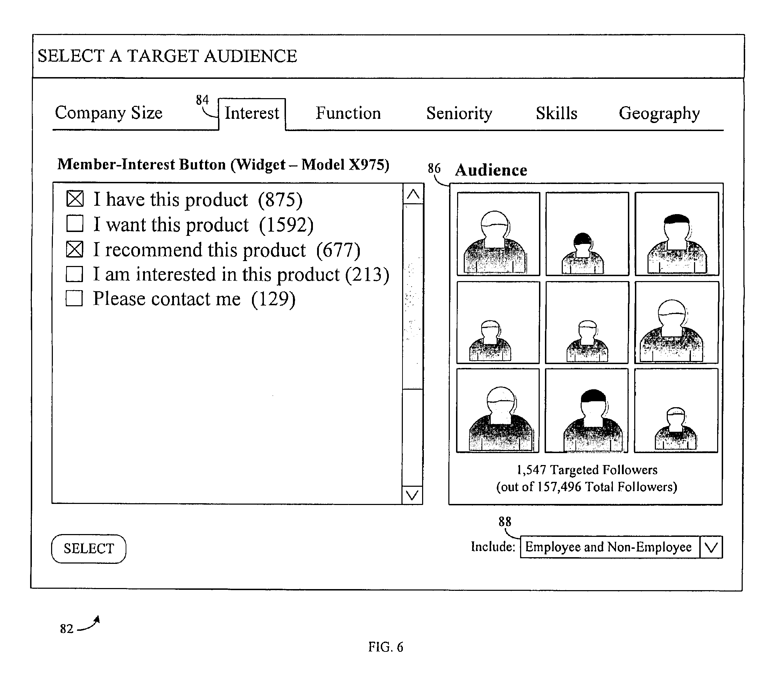

When an author selects to have a message or status update communicated to a targeted audience, the author may be presented with a user interface for a member-targeting module, similar to that shown in FIG 6. In the example user interface of FIG. 6, the author of a message or status update is presented with several categories of member profile attributes, including: Company Size, Interest, Function, Seniority, Skills, and Geography. By selecting the tab associated with a particular category of member profile attribute, the author will be presented with a user interface enabling the author to select various member profile attributes as targeting criteria for selecting an intended audience of the published message or status update. In the example of FIG. 6, the currently selected tab corresponds with the "Interest" category 84. Accordingly, the author of the message or status update can select one or more member-interest button types, as targeting criteria, for the message or status update being published. Specifically, each member-interest button type presented is representative of the members who have selected that particular type of member-interest button in connection with the particular product or service to which the message relates. In this example, eight-hundred seventy-five members have previously selected a member-interest button labelled as, "I have this product," in connection with the product, "Widget - Model X975". Similarly, six-hundred seventy-seven members have selected a member-interest button to indicate that the members recommend the product. If the author publishes a message or status update after selecting the certain member-interest button types as targeting criteria, only those members of the social network service who have interacted or selected a member-interest button presented in connection with the selected product, will receive the published message in their personalized activity or content stream. By selecting members who have interacted with various member-interest buttons in this manner, the message author can tailor a message to a very specific audience likely to be receptive to receipt of the message.

As the author selects various member profile attributes, the portion of the user interface with reference number 86 is automatically updated to show member information (e.g., profile photographs) of a subset of the members of the social network service who will receive the message or status update in their respective personalized activity or content streams, based on the currently selected targeting criteria. Additionally, as indicated in connection with reference number 86, the size of the targeted audience, based on the currently selected targeting criteria, is displayed. For instance, in the example of FIG. 6, based on the currently selected targeting criteria, 1,547 members of the social network service will receive the published message or status update in their respective personalized content streams, out of a possible 157,496 members who are eligible to receive messages published on behalf of the company because they are following the company, or have otherwise subscribed to receive information published on behalf of the company.

As indicated by reference number 88 in FIG. 6, with some embodiments, the author can select as targeting criteria whether a message or status update should be communicated to employees, non-employees, or both employees and non-employees of the company on whose behalf the message or status update is being published. For example, if an author of a message being published on behalf of ACME Products would like the message to be received only by employees of the company, the author can select "Employees", thereby limiting the audience to only employees of the company.

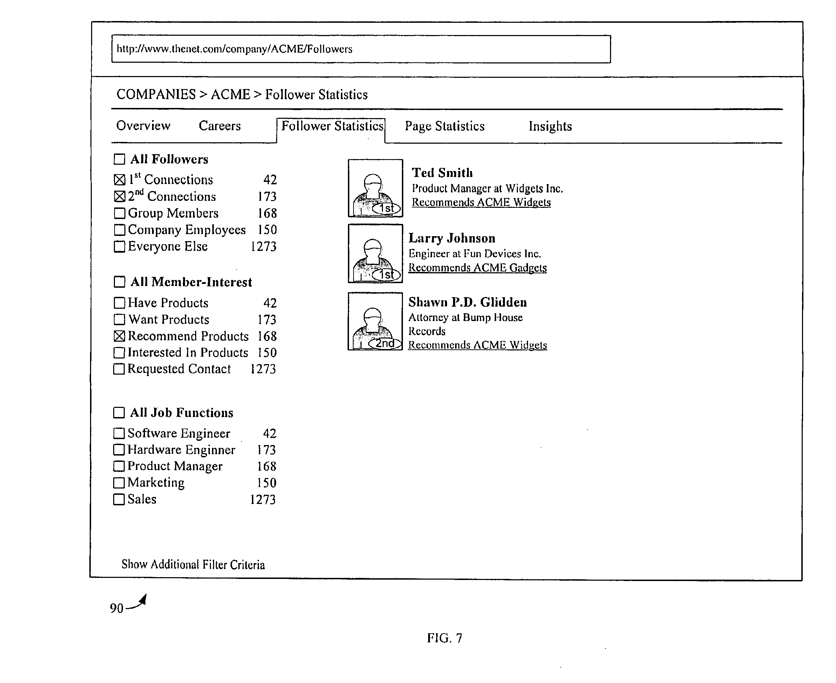

FIG. 7 is a user interface diagram illustrating an example of a user interface or web page showing information about certain members of a social network service who have expressed an interest in a particular product or service of a company, consistent with some embodiments. In the example of FIG. 7, by selecting various filtering criteria, an administrator or authorized representative of a company can view member profile information for those members of the social network service who are following the company, and have the selected member profile attributes. In particular, a representative of the company can identify the particular members who have interacted with specific member-interest buttons presented in connection with various products or services of the company. With some embodiments, the filtering criteria may enable the administrator to view member information about members who have interacted with various member-interest buttons presented in connection with any product or service, while in other embodiments, the filtering criteria may enable the administrator to view member information about members who have interacted with various member-interest buttons presented in connection with specific products or services.

Although the many examples presented herein involve publishing messages or status updates to an activity or content stream, in other embodiments, the same member targeting logic may be used to communicate any of a wide variety of message types. For example, the member targeting logic described herein may be used to communicate an email message, a text message, or any other type of message. With some embodiments, a message publishing interface may allow the message author to select the particular communication medium (e.g., status update, email, text message, etc.) by which a message is to be communicated to the desired audience. In many of the examples presented herein, the member-interest buttons are described as being presented in connection with a message or status update presented in an activity or content stream. However, skilled artisans will readily recognize that a member-interest button might be displayed or presented in a variety of different contexts, and with a variety of different content or content types. For example, the member-interest buttons may be presented along with content that is hosted by parties other than the provider of the social network service. Additionally, although many of the example user interfaces presented herein are described as web pages, a skilled artisan will appreciate that the inventive subject matter may be implemented as a mobile application leveraging one or more application programming interfaces (APIs) of a mobile operating system, and having user interfaces that are customized for presentation on a mobile device.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules or objects that operate to perform one or more operations or functions. The modules and objects referred to herein may, in some example embodiments, comprise processor-implemented modules and/or obj ects.

Similarly, the methods described herein may be at least partially processor-implemented. For example, at least some of the operations of a method may be performed by one or more processors or processor-implemented modules. The performance of certain operations may be distributed among the one or more processors, not only residing within a single machine or computer, but deployed across a number of machines or computers. In some example embodiments, the processor or processors may be located in a single location (e.g., within a home environment, an office environment or at a server farm), while in other embodiments the processors may be distributed across a number of locations.

The one or more processors may also operate to support performance of the relevant operations in a "cloud computing" environment or within the context of "software as a service" (SaaS). For example, at least some of the operations may be performed by a group of computers (as examples of machines including processors), these operations being accessible via a network (e.g., the Internet) and via one or more appropriate interfaces (e.g., Application Program Interfaces (APIs)).

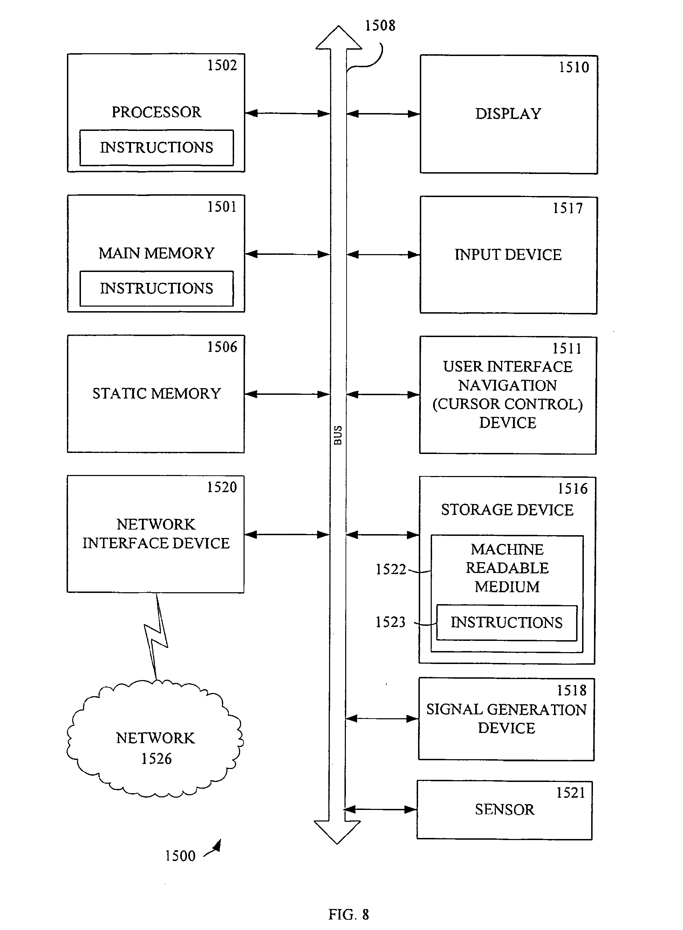

FIG. 8 is a block diagram of a machine in the form of a computer system within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a client-server network environment, or as a peer machine in peer-to-peer (or distributed) network environment. In a preferred embodiment, the machine will be a server computer, however, in alternative embodiments, the machine may be a personal computer (PC), a tablet PC, a set-top box (STB), a Personal Digital Assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1500 includes a processor 1502 (e.g., a central processing unit (CPU), a graphics processing unit (GPU) or both), a main memory 1501 and a static memory 1506, which communicate with each other via a bus 1508. The computer system 1500 may further include a display unit 1510, an alphanumeric input device 1517 (e.g., a keyboard), and a user interface (UI) navigation device 1511 (e.g., a mouse). In one embodiment, the display, input device and cursor control device are a touch screen display. The computer system 1500 may additionally include a storage device 1516 (e.g., drive unit), a signal generation device 1518 (e.g., a speaker), a network interface device 1520, and one or more sensors 1521, such as a global positioning system sensor, compass, accelerometer, or other sensor.

The drive unit 1516 includes a machine-readable medium 1522 on which is stored one or more sets of instructions and data structures (e.g., software 1523) embodying or utilized by any one or more of the methodologies or functions described herein. The software 1523 may also reside, completely or at least partially, within the main memory 1501 and/or within the processor 1502 during execution thereof by the computer system 1500, the main memory 1501 and the processor 1502 also constituting machine-readable media.

While the machine-readable medium 1522 is illustrated in an example embodiment to be a single medium, the term "machine-readable medium" may include a single medium or multiple media (e.g., a centralized or distributed database, and/or associated caches and servers) that store the one or more instructions. The term "machine-readable medium" shall also be taken to include any tangible medium that is capable of storing, encoding or carrying instructions for execution by the machine and that cause the machine to perform any one or more of the methodologies of the present invention, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks.

The software 1523 may further be transmitted or received over a communications network 1526 using a transmission medium via the network interface device 1520 utilizing any one of a number of well-known transfer protocols (e.g., HTTP). Examples of communication networks include a local area network ("LAN"), a wide area network ("WAN"), the Internet, mobile telephone networks, Plain Old Telephone (POTS) networks, and wireless data networks (e.g., Wi-Fi® and WiMax® networks). The term "transmission medium" shall be taken to include any intangible medium that is capable of storing, encoding or carrying instructions for execution by the machine, and includes digital or analog communications signals or other intangible medium to facilitate communication of such software.According to one aspect, there is disclosed a non-transitory computer readable storage medium storing instructions thereon, which, when executed by one or more processors of one or more computers, cause the one or more computers to: receive content to be published as a message on behalf of a company, the message relating to a specific product or service of the company; present a member-targeting interface that enables an authorized representative of the company to specify member-targeting criteria that determines which members of the social network service are to receive the message in a personal activity stream, the member-targeting interface presenting a selectable user interface element, which, when selected, will cause the message to be presented in the personal activity streams of all members of the social network service who have previously expressed interest in the specific product or service of the company by interacting with a member-interest user interface element previously presented with content relating to the same specific product or service of the company; and publish the message so that the message is presented in the personalized activity streams of all members of the social network service who satisfy specified member-targeting criteria.

According to another aspect, there is disclosed a non-transitory computer readable storage medium storing instructions thereon, which, when executed by one or more processors of one or more computers, cause the one or more computers to: detect selection of a member-interest user interface element presented in association with content relating to a product or service of a company that is represented in a social graph of a social network service; store information indicating the selection of the member-interest user interface element in association with the product or service of the company and a member identifier of a member of the social network service who has selected the member-interest user interface element; and present a member-targeting interface that enables an authorized representative of the company to specify member-targeting criteria that determines which members of the social network service are to receive the message in a personal activity stream, the member-targeting interface presenting a selectable user interface element, which, when selected, will cause the message to be presented in the personal activity streams of all members of the social network service who have previously expressed interest in the specific product or service of the company by interacting with the member-interest user interface element previously presented with the content relating to the product or service of the company.

There are disclosed techniques for generating leads for a company's products and/or services. A message publishing module provides a means for specifying different member-interest buttons to be presented in connection with messages published to the activity or content streams of members of a social network service, where such messages relate to specific products and/or services of a company. The social network service detects which members interact or select the various member-interest buttons, and in connection with which specific products and services. This information is then provided to authorized administrators or representatives of the company, and made available as member-targeting criteria for targeting members with subsequent messages.

Although an embodiment has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

## Claims

1. A method comprising:
at a processor-implemented message publishing module, receiving content to be published as a message on behalf of a company, the message relating to a specific product or service of the company;
presenting a member-targeting interface that enables an authorized representative of the company to specify member-targeting criteria that determines which members of the social network service are to receive the message in a personal activity stream, the member-targeting interface presenting a selectable user interface element, which, when selected, will cause the message to be presented in the personal activity streams of all members of the social network service who have previously expressed interest in the specific product or service of the company by interacting with a member-interest user interface element previously presented with content relating to the same specific product or service of the company; and
publishing the message so that the message is presented in the personalized activity streams of all members of the social network service who satisfy specified member-targeting criteria.

2. The method of claim 1, further comprising:
associating the message with the specific product or service of the company in response to detecting a selection of the specific product or service via a user interface of the message publishing module.

3. The method of any one of the preceding claims, further comprising:
publishing the message with a number and type of member-interest buttons that are consistent with the number and type of member interest buttons specified by an author of the message via the user interface of the message publishing module.

4. The method of any one of the preceding claims, further comprising:
publishing the message with a number and type of member-interest buttons that are consistent with the number and type of member-interest buttons specified in a user-configurable default message format for messages relating to the specific product or service.

5. The method of any one of the preceding claims, wherein the selectable user interface element will, when selected, cause the message to be presented in the personal activity streams of all members of the social network service who have previously interacted with a member-interest user interface element presented with a previously displayed message relating to the same specific product or service of the company, wherein the interaction with the member-interest user interface elements represents a member's acknowledgement of any one of: i) owning the product or having used the service, ii) recommending the product or service, iii) desiring more information about the product or service, or iv) desiring to have the product or service.

6. The method of any one of the preceding claims, wherein the message presented in the personalized activity streams of all members of the social network service who satisfy specified member-targeting criteria includes information about promotional pricing for the product or service, and/or wherein the message presented in the personalized activity streams of all members of the social network service who satisfy specific member-targeting criteria includes information enabling a recipient to obtain a digital coupon that is redeemable when purchasing the specific product or service, and/or wherein the message presented in the personalized activity streams of all members of the social network service who satisfy specific member-targeting criteria includes information enabling a recipient of the message to obtain a digital pass that is compatible with a mobile application for managing passes that represent coupons, tickets, or merchant loyalty cards.

7. A system configured to operate an online social network service, the system comprising:
a processor-implemented message publishing module to receive content to be published as a message on behalf of a company, the message relating to a specific product or service of the company; and
processor-implemented member targeting logic to present a member-targeting interface that enables an authorized representative of the company to specify member-targeting criteria that determines which members of the social network service are to receive the message in a personal activity stream, the member-targeting interface presenting a selectable user interface element, which, when selected, will cause the message to be presented in the personal activity streams of all members of the social network service who have previously expressed interest in the specific product or service of the company by interacting with a member-interest user interface element previously presented with content relating to the same specific product or service of the company;
wherein the message publishing module is further to publish the message so that the message is presented in the personalized activity streams of all members of the social network service who satisfy specified member-targeting criteria.

8. A method comprising:
detecting selection of a member-interest user interface element presented in association with content relating to a product or service of a company that is represented in a social graph of a social network service;
storing information indicating the selection of the member-interest user interface element in association with the product or service of the company and a member identifier of a member of the social network service who has selected the member-interest button; and
presenting, by processor-implemented member-targeting logic, a member-targeting interface that enables an authorized representative of the company to specify member-targeting criteria that determines which members of the social network service are to receive the message in a personal activity stream, the member-targeting interface presenting a selectable user interface element, which, when selected, will cause the message to be presented in the personal activity streams of all members of the social network service who have previously expressed interest in the specific product or service of the company by interacting with the member-interest user interface element previously presented with the content relating to the product or service of the company.

9. The method of claim 8, where the member-interest user interface element is presented in association with web-based content hosted by the company, and/or wherein the member-interest user interface element is presented in association with content hosted by a server operating the social network service.

10. The method of claim 8 or 9, wherein the content and the member-interest user interface element are part of a message published by an authorized representative of the company and presented in a personalized activity stream of the member of the social network serviceand/or wherein the selection of the member-interest user interface element is detected by the server hosting the content.

11. The method of any one of the preceding claims 8 to 10, wherein the member-interest user interface element is specifically labeled with, or otherwise includes, text to indicate that selection of the member-interest user interface element represents acknowledgment by the member of ownership of the product, or prior use of the service, of the company.

12. The method of any one of the preceding claims 8 to 11, wherein the member-interest user interface element is specifically labeled with, or otherwise includes, text to indicate that selection of the member-interest user interface element represents acknowledgment by the member of interest in purchasing the product or service of the company, and/or wherein the member-interest user interface element is specifically labeled with, or otherwise includes, text to indicate that selection of the member-interest user interface element represents acknowledgment by the member of recommending the product or service of the company, and/or wherein the member-interest user interface element is specifically labeled with, or otherwise includes, text to indicate that selection of the member-interest user interface element represents acknowledgment by the member of a desire to be contacted by a representative of the company concerning the product or service of the company.

13. A computer program product comprising computer-readable instructions thereon, which, when loaded and executed by one or more processors of one or more computers, cause the one or more computers to perform the steps of a method according to any one of the preceding claims 1 to 6 and 8 to 12.

14. A system comprising:
a processor-implemented detection module to detect selection of a member-interest user interface element presented in association with content relating to a product or service of a company that is represented in a social graph of a social network service, and to store information indicating the selection of the member-interest user interface element in association with the product or service of the company and a member identifier of a member of the social network service who has selected the member-interest button; and
processor-implemented member-targeting logic to present a member-targeting interface that enables an authorized representative of the company to specify member-targeting criteria that determines which members of the social network service are to receive the message in a personal activity stream, the member-targeting interface presenting a selectable user interface element, which, when selected, will cause the message to be presented in the personal activity streams of all members of the social network service who have previously expressed interest in the specific product or service of the company by interacting with the member-interest user interface element previously presented with the content relating to the product or service of the company.
